# EUROPEAN PATENT APPLICATION

(11) **EP 3 300 785 A1**
(43) Date of publication of application: **04.04.2018**
(21) Application number: 16191922.0
(22) Date of filing: 30.09.2016
(51) Int. Cl.: B01D 35/00, C02F 1/00, B01D 35/30

(54) **ON-PIPE FILTER HOUSING FOR LIQUIDS**

(71) Applicant: Aquafilter Europe Sp. z o. o., 91-222 Lodz (PL)
(72) Inventor: Sakowsky, Jon, 91-222 Lodz (PL)
(74) Representative: Rumpel, Alicja

(57) **Abstract**

An on-pipe filter housing for liquids, particularly intended for water, consisting of a body and a head unit, which mutually cooperate through an intermediate, severable, mounted on the body, preferably screwed-in lid with a connecting stub pipe, the stub pipe stabilized in the connecting inlet of the head unit by a rotary-ratchet mechanism, and the lid with the connecting stub pipe is generally shaped as a cap, the cap being screwed onto the housing body, from which a stub pipe protrudes, and the diameter of the stub pipe is smaller than the diameter of the cap, and at least two solid ledges cooperating with the rotary-ratchet mechanism of the head unit are placed on the surface of the cap, around the connecting stub pipe, consolidated with the stub pipe and with the cap by means of the injection method, and a rotary-ratchet mechanism comprising at least two solid ledges consolidated with the head unit, facing the head unit's axis, cooperating with the rotary-ratchet mechanism of the head unit are placed inside the housing head unit.

## Description

The object of the invention is an on-pipe filter housing for liquids, particularly intended for water, operating in pressurized installations, providing for simple and fast replacement of a filtering cartridge without the use of any additional tools.

Filters for liquids, including water, are important elements of many installations and require regular cleaning or replacement of the filtering bed to operate correctly. Filters mounted on liquid inlets, particularly water inlets in building piping systems or technological lines are the most popular filter types. They are usually in the form of heads permanently installed on fixtures, and bodies with filtering beds, which are periodically demounted for bed replacement or cleaning.

Patent ref. Ru.64619 specifies an on-pipe filter housing displaying the basic characteristics of the aforementioned structure. The subject structure consists of a head and a body, whereas the head comprises a cylinder with a rectangular thread on its surface, connected with a cylinder containing connections and domes housing connecting fixture outlets. The upper part of the body contains an external thread, which matches the thread of the head unit. An O-ring placed in a round notch guarantees the water-tightness of the head-body connection, and additional sealing O-rings are placed in between washers. Reinforcing ribs are installed along the upper and lower part of the body, converging under the bottom of the body, thus forming a base. Two coaxial rings, consolidated with the body protrude from the body towards its interior, whereas the outer ring is lower than the inner ring.

In another example of a filter bearing similar structure, known from a description in Polish utility model ref. 60723, a filter housing for purifying potable water comprises a cylindrical vessel, a filter insert and a head unit connected to an inlet, whereas the head unit has threaded outlets for connection to the water supply network.

In turn, American patent description ref. US 5445734 describes a filter in a cylindrical housing, wherein water flowing along the filter is fed to the filter through a stub pipe placed in the upper part of the housing and, after passing through a filtering insert, it flows out of the filter's interior.

Patent description ref. US 6197193 specifies a drinking water filter in cylindrical housing, with axial liquid flow. The filtering material used changes its filtering capacity as the water proceeds to the outside.

Patent description ref. US3262570 specifies an on-pipe filtration unit, which houses a filtering pad terminated in its upper part with a connection stub pipe equipped with rings, which is used to connect the body with the head.

In turn, patent description ref. US 5 985 143 reveals a filter structure, in which the upper part containing all connections is fixed by means of a slide-in, threaded ring. Such a body and head structure aims at improving the performance of the connection and preventing head and body damage, particularly during the disassembly of the latter.

Other structures, in which quick disconnects are used to improve on the ease of service and reduce the risk of housing damage. An example of this is a solution according to patent ref. CN2766122, wherein a filter housing head with an in-built multiway valve is connected to a spring-pressurized actuator, which directs the filtrate to particular circuits. What is important, according to available information, this solution allows for depressurizing the body when the filtering pad is replaced.

"Plug-in" filters are also known. These are equipped with quick disconnects mounted on garden hoses, in which the filtering insert housing contains a body known from the described solutions, connected to a screw-in lid, whereas both the body and the lid are equipped with connecting stub pipes, usually axially placed. The connection stub pipes are screwed-in or plugged-in to the quick disconnects. Such a structure provides for the disassembly of the entire filter for its comfortable maintenance or storage.

Known on-pipe filter housings work under pressure, hence known attempts at applying quick disconnects in their structures were usually hindered due to the lack of appropriate filter care. This resulted in leaks, predominantly caused by non-axial plugin of the connecting stub pipe into the installation and its further stabilization. In addition, during assembly and disassembly of the body with the filtering pad, the liquid inside the structure needed to be depressurized to release the clamps and remove the body. Therefore, a solution was required to accommodate simplicity of service and small force needed to remove the filtering pad while guaranteeing the water-tightness of the installation and the effectiveness of the filtering pad. A successful solution was developed, consisting in an on-pipe filter housing for liquids, particularly intended for water, according to the invention.

The on-pipe filter housing for liquids, particularly intended for water, according to the invention, consists at least one body and at least one head unit, which mutually cooperate through an intermediate, severable, mounted on the body, preferably screwed-in lid with a connecting stub pipe, which is stabilized in the connecting inlet of the head unit by a rotary-ratchet mechanism. The stub pipe is equipped with at least one O-ring placed in a round notch. The lid with the connecting stub pipe is generally shaped as a cap, screwed onto the housing body, from which a stub pipe protrudes, and the diameter of the stub pipe is smaller than the diameter of the cap, and at least two solid ledges cooperating with the rotary-ratchet mechanism of the head unit are placed on the surface of the cap, around the connecting stub pipe, consolidated with the stub pipe and with the cap by means of the injection method. The lid with the connecting stub pipe has a pass-through, axial hole, the position of which corresponds to the position of a liquid outlet, particularly intended for water, in the connecting head unit, and a second pass-through liquid inlet, particularly intended for water, feeding the liquid from the body, the position of which with the lid assembled on the body and the lid - in the head unit of the housing according to the invention corresponds to the position of the liquid inlet, particularly intended for water. The liquid outlet, which is particularly intended for water, is beneficially shaped as a funnel, narrowing towards the interior of the body, and is surrounded by at least one additional ring, pressing on the filtering pad.

In a beneficial embodiment of the invention, a seal is placed between the body and the lid with the connecting stub pipe. In a beneficial embodiment of the invention, the connecting stub pipe is centrally placed on the cap, in a manner that its longitudinal axis corresponds with the direction of rotation of the cap.

At least two solid ledges placed around the connecting stub pipe are primarily shaped like fragments of a screw line, preferably at least partially flattened and parallel to the enclosed surface of the cap, and at least their beginnings and ends are placed at an angle with respect to to the enclosed surface of the cap.

A rotary-ratchet mechanism is placed inside the head unit of the on-pipe filter housing according to the invention. The mechanism comprises at least two solid ledges consolidated with the head unit, facing the head unit's axis, placed on the surface of the cap, around the connecting stub pipe, consolidated with the stub pipe and with the cap by means of the injection method.

In a beneficial embodiment of the invention, the structure of the ledges in the head unit includes additional hitches, protruding crosswise to the head unit's direction of movement, or these hitches form small ribs, which additionally connect the ledges on the head unit with the material of the lateral surface of the head unit. In the latter embodiment, hitch sockets, formed into notches with corresponding shapes and sizes to the shapes and sizes of the hitches, are placed in the material of the ledges placed around the connecting stub pipe or in their vicinity.

In a beneficial embodiment of the invention, the filter housing head unit according to the invention is a rotary unit formed by connecting at least: a cylinder containing a rotary-ratchet mechanism, topped with a copula resembling a truncated hemisphere, enclosed from the top, and at least one cylinder with fixtures for connecting to installations, perpendicular to the head unit's direction of rotation, piercing through the copula. The round, hemisphere shape of the copula evenly distributes the forces inside the housing and resulting from the hydrostatic and hydrodynamic pressures acting inside the housing, and allows for the use of a filter in a housing according to the invention in installations with relatively high pressure levels. In a beneficial embodiment of the invention, the connecting fixtures are contra-rotating and are equipped with a ribbing on their external surfaces, laid perpendicularly to the axes of the connecting holes. In a beneficial embodiment of the invention, brass pads with female threads with enwrapping seals in the form of one O-ring per every pad, placed between the pad and the housing, are placed inside the connecting fixtures.

The female thread inside the lid with the connecting stub pipe matches in size the thread in the upper part of the cylindrical body. In a beneficial embodiment of the invention, at least one of the threads: the female and/or male thread is rectangular and rounded at the tip. In another, beneficial embodiment of the invention, at least one of the threads is round. Such a threaded connection of the body and the head unit with the connecting stub pipe additionally reinforces the connection, protecting it from accidental unscrewing and/or leaking in result of installation vibrations caused by water flow and flow velocity changes. At least one ring-shaped notch with an O-ring sealing the housing is placed on the threaded surface of the lid with the connecting stub pipe or of the filter housing body, whereas the connecting stub pipes, i.e. the water inlet and outlet, are extensions of the feed ducts placed inside the head unit, at an angle close to perpendicular to the axis of the connecting stub pipes. The liquid feed duct, particularly intended for water, is external in relation to the internal duct and the axial liquid outlet, particularly intended for water, in the head unit.

The on-pipe filter housing according to the invention can be set in a filtering line with other housings according to the invention, for instance by reducing the pores of the filtering bed in successive filtering stages.

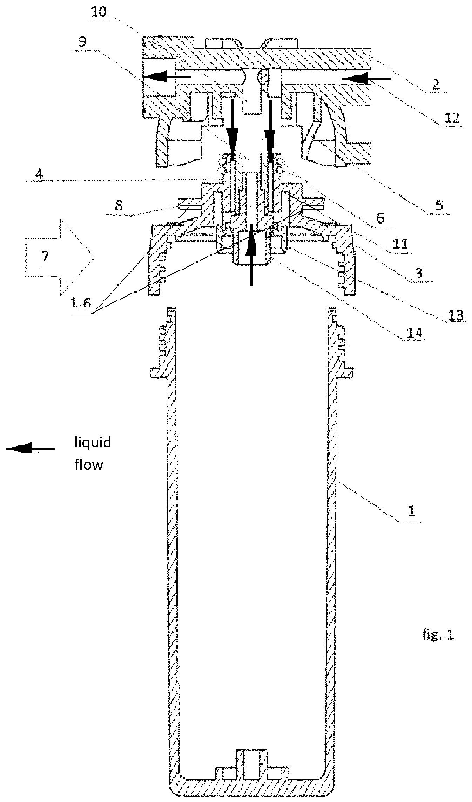

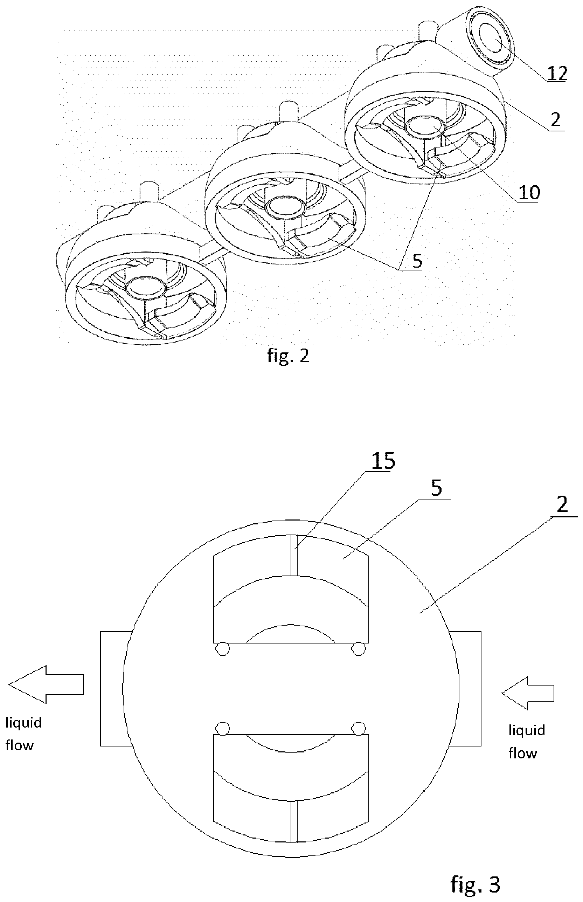

An on-pipe filter housing for liquids, particularly intended for water, as presented in the figure, in which fig. 1 illustrates the cross-section of the housing structure, and fig. 2 illustrates the 3D view of filter housing elements when several filter housings according to the invention are set in one filtering line with three filtering levels, and fig. 3 illustrates a top view of the head unit of the housing according to the invention, with visible additional hitches.

### Example I

The on-pipe filter housing for liquids, particularly intended for water, according to the invention, contains a body 1 and a head unit 2, which mutually cooperate through an intermediate, severable, mounted on the head unit 2, preferably screwed-in to the body 1 lid 3 with a connecting stub pipe 4, which is stabilized in the connecting inlet of the head unit by a rotary-ratchet mechanism 5. The connecting stub pipe 4 is equipped with O-rings 6 placed in round notches. The lid 3 with the connecting stub pipe 4 is generally shaped as a cap 7, screwed onto the housing body 1, from which a stub pipe 4 directed towards the body 1 protrudes, and the diameter of the stub pipe is smaller than the diameter of the cap 7, and at least two solid ledges 8 cooperating with the rotary-ratchet mechanism 5 of the head unit 2 are placed on the surface of the cap 7, around the connecting stub pipe 4, consolidated with the stub pipe 4 and with the cap by means of the injection method.

The lid 3 with the connecting stub pipe 4 has a pass-through, axial hole 9, the position of which corresponds to the position of a liquid outlet 10, particularly intended for water, in the head unit 2, and a second pass-through liquid inlet 11, particularly intended for water, feeding the liquid from the body 1, the position of which with the lid 3 assembled on the body 1 and the lid 3 - in the head unit 2 of the housing according to the invention corresponds to the position of the liquid inlet 12, particularly intended for water. The pass-through axial hole 10 is beneficially shaped as a funnel 14, narrowing towards the interior of the body 1, and is surrounded by at least one additional ring 13, pressing on the filtering pad (not illustrated in the figure).

A seal is placed between the body 1 and the lid 3 with the connecting stub pipe 4, and the connecting stub pipe 4 is centrally placed on the cap, in a manner that its longitudinal axis corresponds with the direction of rotation of the cap 7.

The solid ledges 8 placed around the connecting stub pipe 4 are primarily shaped like fragments of a screw line, partially flattened and parallel to the enclosed surface of the cap 7, and their beginnings and ends are placed at an angle in reference to the enclosed surface of the cap 7.

A rotary-ratchet mechanism 5 is placed inside the head unit 2 of the on-pipe filter housing according to the invention. The mechanism 5 comprises solid ledges 5 consolidated with the head unit 2 by means of the injection method, facing the head unit's 2 axis, , whereas their number corresponds to the number of solid ledges intended to cooperate with the rotary-ratchet mechanism 5 of the head unit 2.

The structure of the ledges 5 in the head unit 2 includes additional hitches 15, protruding in the head unit's 2 direction of movement, which form small ribs, which additionally connect the ledges 15 on the head unit 2 with the material of the lateral surface of the head unit 2. Whereas in this case, hitch 15 sockets, formed into notches with corresponding shapes and sizes to the shapes and sizes of the hitches 15, are placed in the material of the ledges 8 placed around the connecting stub pipe 4.

The filter housing head unit 2 according to the invention is a rotary unit formed by connecting at least: a cylinder containing a rotary-ratchet mechanism, topped with a copula resembling a truncated hemisphere, enclosed from the top, and at least one cylinder with fixtures for connecting to installations, perpendicular to the head unit's direction of rotation, piercing through the copula. The round, hemisphere shape of the copula evenly distributes the forces inside the housing and resulting from the hydrostatic and hydrodynamic pressures acting inside the housing, and allows for the use of a filter in a housing according to the invention in installations with relatively high pressure levels. In a beneficial embodiment of the invention, the connecting fixtures are contra-rotating and are equipped with a ribbing on their external surfaces, laid perpendicularly to the axes of the connecting holes. In a beneficial embodiment of the invention, brass pads with female threads with enwrapping seals in the form of one O-ring per every pad, placed between the pad and the housing, are placed inside the connecting fixtures. Whereas the connecting stub pipes, i.e. the water inlet and outlet, are extensions of the feed ducts placed inside the head unit, at an angle close to perpendicular to the axis of the connecting stub pipes.

The female thread inside the lid with the connecting stub pipe matches in size the thread in the upper part of the cylindrical body. One of the threads is rectangular and rounded at the tip. Such a threaded connection of the body and the head unit with the connecting stub pipe additionally reinforces the connection, protecting it from accidental unscrewing and/or leaking in result of installation vibrations caused by water flow and flow velocity changes. A round notch with an O-ring sealing the housing is placed on the threaded surface of the lid with the connecting stub pipe.

## Claims

1. An on-pipe filter housing for liquids, particularly intended for water, containing at least one body (1) and at least one head unit (2), **characterized in that** the body (1) and the head unit (2) mutually cooperate through an intermediate, severable lid (3), mounted on the head unit (2), the lid (3) being preferably screwed-in to the body (1) with a connecting stub pipe (4), the stub pipe (4) being stabilized in the connecting inlet of the head unit by a rotary-ratchet mechanism (5), and the lid (3) with the connecting stub pipe (4) is generally shaped as a cap (7), the cap (7) being screwed onto the housing body (1), from which a stub pipe (4) directed towards the body (1) protrudes, and the diameter of the stub pipe is smaller than the diameter of the cap (7), and at least two solid ledges (8) cooperating with the rotary-ratchet mechanism (5) of the head unit (2) are placed on the surface of the cap (7), around the connecting stub pipe (4), consolidated with the stub pipe (4) and with the cap (3) by means of the injection method, and a rotary-ratchet mechanism (5) comprising at least two solid ledges (5) consolidated with the head unit (2), facing the head unit's (2) axis, cooperating with the rotary-ratchet mechanism (5) of the head unit are placed inside the housing head unit (2), and the lid (3) with the connecting stub pipe (4) has a pass-through, axial hole (9), the position of which corresponds to the position of a liquid outlet (10), particularly intended for water, in the head unit (2), and a second pass-through liquid inlet (11), particularly intended for water, feeding the liquid from the body (1), the position of which with the lid (3) assembled on the body (1) and the lid (3) - in the head unit (2) of the housing according to the invention corresponds to the position of the liquid inlet (12), particularly intended for water.

2. The housing according to claim 1, **characterized in that** at least two solid ledges (8) placed around the connecting stub pipe (4) are primarily shaped like fragments of a screw line, at least partially flattened and parallel to the enclosed surface of the cap, and their beginnings and ends are placed at an angle in reference to the enclosed surface of the cap (7).

3. The housing according to claim 1 or 2, **characterized in that** at least two solid ledges (8) placed around the connecting stub pipe (4) cooperate with the ledges (5) of the head unit (2) in a manner that the structure of the ledges (5) in the head unit (2) includes additional hitches (15), protruding in the head unit's (2) direction of movement, and hitch (16) sockets, formed into notches with corresponding shapes and sizes to the shapes and sizes of the hitches (15), are placed in the material of the ledges (8) placed around the connecting stub pipe (4).

4. The housing according to claim 1 or 2 or 3, **characterized in that** the hitches (15) form small ribs, which additionally connect the ledges (15) on the head unit (2) with the material of the lateral surface of the head unit (2), and hitch sockets (16), formed into notches with corresponding shapes and sizes to the shapes and sizes of the hitches (15), are placed in the material of the ledges (8) placed around the connecting stub pipe (4).

5. The housing according to claim 1 or 2 or 3 or 4, **characterized in that** the connecting stub pipe (4) is equipped with at least one O-ring (6) placed in a round notch, and a seal is placed between the body (1) and the lid (3) with the connecting stub pipe (4).

6. The housing according to any of the previous claims, **characterized in that** the filter housing head unit (2) according to the invention is a rotary unit formed by connecting at least: a cylinder containing a rotary-ratchet mechanism, topped with a copula resembling a truncated hemisphere, enclosed from the top, and at least one cylinder with fixtures for connecting to installations, perpendicular to the head unit's direction of rotation, piercing through the copula, and the connecting fixtures are contra-rotating and are equipped with a ribbing on their external surfaces, laid perpendicularly to the axes of the connecting holes, and brass pads with female threads with enwrapping seals in the form of one O-ring per every pad, placed between the pad and the housing, are placed inside the connecting fixtures, and the connecting stub pipes, i.e. the water inlet and outlet, are extensions of the feed ducts placed inside the head unit, at an angle close to perpendicular to the axis of the connecting stub pipes.
